# EUROPEAN PATENT APPLICATION

(11) **EP 2 731 071 A1**
(43) Date of publication of application: **14.05.2014**
(21) Application number: 12461556.8
(22) Date of filing: 07.11.2012
(51) Int. Cl.: G06Q 50/16, G06T 17/00, G06T 17/05

(54) **Method of providing user interface, especially for conducting commercial transactions over the internet**

(71) Applicant: Instytut Podstaw Informatyki Polskiej Akademii Nauk, 01-248 Warszawa (PL)
(72) Inventor: Ambroszkiewicz, Anna, 02-904 Warszawa (PL); Ambroszkiewicz, Stanislaw, 02-904 Warszawa (PL); Bartyna, Waldemar, 37-418 Krzeszow (PL); Faderewski, Marek, 06-320 Baranowo (PL); Jaroszynski, Marcin, 08-110 Siedlce (PL); Kociolek, Tomasz, 08-110 Siedlce (PL); Kulma, Piotr, 05-300 Minsk Mazowiecki (PL); Mikulowski, Dariusz, 08-110 Siedlce (PL); Pilski, Marek, 08-110 Siedlce (PL); Ryzko, Andrzej, 08-110 Siedlce (PL); Salamonczyk, Andrzej, 08-110 Siedlce (PL); Skarzynski, Kamil, 07-100 Wegrow (PL); Stepniak, Marcin, 08-124 Mokobody (PL); Terlikowski, Grzegorz, 08-205 Kornica (PL); Vojteshenko, Iosif, 220007 Minsk (BY); Zdunek, Pawel, 21-560 Miedzyrzec Podlaski (PL)
(74) Representative: Sielewiesiuk, Jakub

(57) **Abstract**

The subject of the invention is a method of providing user interface for communication between a user, with user-related information stored in the database of users, and a supplier, with supplier-related information stored in the database of suppliers, especially for conducting commercial transactions over the Internet, carried out by means of a digital processing device that communicates with a display, data input devices, data output devices and data transmission devices, comprises the following steps:
a) obtaining a digital model of a real building corresponding to the supplier,
b) obtaining data that describe the exact geographical location of this real building corresponding to the supplier,
c) obtaining graphical data corresponding to a digital map of the neighbourhood of the real building corresponding to the supplier,
d) processing graphical data obtained in step c) by positioning said digital model on said digital map of the neighbourhood, according to the data that describe the exact geographical location of the real building corresponding to the supplier, obtained in step b),
e) displaying a visualization of graphical data processed in step d) using said display, and
f) enabling said communication between the user and the supplier depending on said visualization, wherein

said steps a)-f) are performed dependent on the input data provided by the user by means of a data input device that communicates with said digital processing device.

## Description

### Technical field

The present invention relates to the method of providing user interface for communication between the user, with the user-related information stored in the database of users, and the supplier, with the supplier-related information stored in the database of suppliers, especially for conducting commercial transactions over the Internet, embodied by means of a digital processing device that communicates with the display, data input devices, data output devices and data transmission devices.

### Background

Known and widely used technologies (www applications) are global by assumption and operate globally (or at least on the scale of an entire country or language). It applies to social networking sites (such as Facebook, Google+, VK, NK, Linkedln, Goldenline), e-markets in the form of auction portals (e.g. Allegro, eBay), bulletin board services with sale and purchase offers or providing services (tablica.pl, oferia.pl, gumtree.pl, sprzedajemy.pl, lento.pl, lokalneogloszenia.pl, oglaszam.pl, top-ogloszenia.net, stragan.info, favore.pl), and, finally, electronic commodity exchanges or markets (e.g. gruuna.com - international agricultural online marketplace or netbrokers.pl on the Polish farm and food market).

Existing electronic markets offer a small selection of social media, usually limited to chats and forums. On the other hand, if a social networking site contains market elements, they are usually in the form of bulletin board services concerning commodities or services, e.g. a Russian portal VK.

However, currently available solutions regarding the use of maps in social and business services involve determining the route between two points or locating a given address on a 2D map (http://maps.google.pl/, http://www.targeo.pl/, http://www.imap24.pl/, etc.). Additionally, it is possible to add a point representing a company, an institution, a service centre or a shop located in the selected place. This point allows to access information about the object it represents (e.g. company name, contact information, website, or even information about the field of industry and client opinions). This information is usually presented in the form of a "dialogue bubble" containing text information and a link to the company's website.

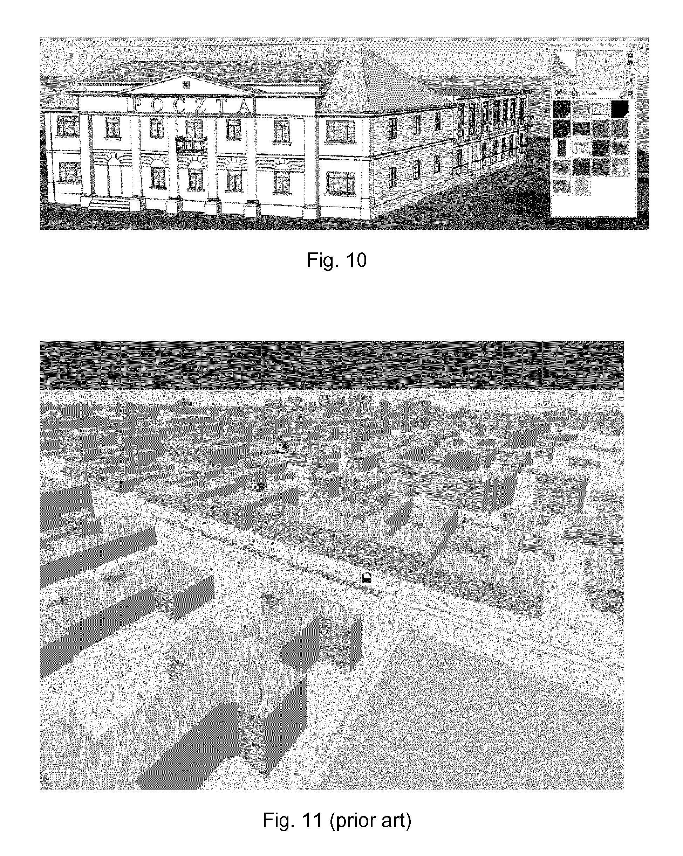

In turn, Planet.osm is a global project of OpenStreetMap (http://wiki.openstreetmap.org/wiki/Planet.osm), aimed at the development of a free map of the whole world available to everyone. What's most important, the map may be edited by anyone, which is the reason, why it is referred to as the cartographic equivalent of Wikipedia. Any data used in the project are available under the Creative Commons open licence, which permits further use of the data, i.e. in GPS navigation systems, and makes it a free alternative to commercial maps. In addition to a 2D map (roads, forests, lakes, etc.), it contains information about 3D shapes of existing buildings and POIs (Points of interest) in the form of icons placed in appropriate geographical locations on the map. Unfortunately, the 3D shapes of buildings are, in most cases, stretched uprights shapes based on the 2D map, and their proportions are not always retained. Moreover, all shapes representing buildings are of the same colour, and have no texture (fig. 11, background), which makes it impossible to find a particular tenement building (with the service centre) in a row of adjacent buildings.

There are also tools for modelling 3D objects and placing them on maps. One of such tools is Google SketchUp (http://sketchup.google.com/intl/pl/), which enables the user to create three-dimensional models (buildings, sculptures, etc.), and place them on the map in the Google Earth application. This solution does not allow for business interactions between the service provider and the client.

Some internet services enable businesses to promote their services and conduct transactions online. They include:
- Simple web pages, optionally linked to a database containing data about products and services offered by a given supplier, available for the conclusion of the transaction, by filling in an appropriate online form; interfaces of such www pages contain text and images, and are not very attractive. In case of platforms that group suppliers of different kinds of products (e.g. allegro.pl, ebay.com) finding an appropriate supplier requires using an index, a list or a complex category menu or using a search engine.
- Cyber Expo 3D (http://www.cyberexpo3d.com/) - a realistic, interactive, virtual trade show for all kinds of industries and trade organizations. Exhibitors can buy exhibition booths and promote their products/services, while customers can walk around the virtual fair, visit exhibition booths, participate in educational programs offered by exhibitors and conduct transactions. Contrary to the proposed invention, it is a model of a hypothetical exhibition hall (that does not exist in reality), inside which (hall, alleys, exhibition booths) user's activities, including the conclusion of transactions, are realized.
- A project named 3D City World (http://www.3dcity-world.com/3dcity/virtual-3d-worlds.phtml). It is a model of a hypothetical 3D city, in which all users may move freely with a selected 3D avatar, buy products while visiting shopping centres, shops or exhibitions as well as interact and communicate with each other (chats), advertise, etc. However, the 3D city does not reflect geographical reality (geographical location and the real appearance of the buildings where the companies are located). This approach has a basic disadvantage, namely, each user has to get familiar with the topology of the virtual city. Alternatively, just like in the case of said simple web pages, finding a particular supplier in the virtual city requires using an index, a list or a complex category menu or using a search engine.

Application CA 2 320 523 describes an online virtual fair and an exhibition. The 3D fair enables interactions between participants (visitors) and exhibitors. Moreover, both parties may conclude commercial transactions. The application also contains the description of methods incentivizing potential visitors to participate in the fair, such as bonuses for the time spent at the fair, rewards for interactions with exhibitors or lotteries. In addition, the service allows exhibitors to distribute information to selected customers, based on the data about the registered users (e.g. geographical data). The commercial offer may then be addressed to customers located in a certain area. The offer may include commercial information or an invitation to visit a particular 3D exhibition booth. In contrast to the proposed invention, the interface is restricted to the interior of the hypothetical exhibition hall, and, as such, has all the drawbacks mentioned above (for 3D City World) related to topography, which is hypothetical and/or unknown to the user.

Currently existing social networking sites do not provide their users with sufficient tools to facilitate the functioning of various communities. They are focused on individual users and their relations (contacts) with other users, and not on the communities as such. It is clearly visible that these portals evolve towards communities (e.g. circles in Google+, followed by smart lists in Facebook). However, they still fail to provide tools to enable the functioning of real user communities or business communities; they would require a radical redevelopment.

At present, the method of using on-line maps is static and of informational character by nature. However, if these maps were enriched with three-dimensional models and if an appropriate graphical engine was used, they could be used in new, more attractive ways. Such a solution might have a positive influence on the social and business service and its development, by, on the one hand, attracting users (also by providing tools to establish local communities), and, on the other hand, by providing new methods of marketing and interactions with clients.

In turn, traditional e-shops present products and services in an unattractive form, in tables, and finding a particular shop on an e-commerce platform requires browsing the table or using a search engine.

Existing solutions in the field of virtual fairs or 3D cities are limited to an area either in terms of territorial range (a single city) or the cubage of a building (a building housing a fair or an exhibition). Users of such a 3D service must put a lot of effort into familiarizing themselves with its topology before they can use the services it offers easily. Consequently, such solutions are hypothetical places, with no reference to reality. In this application, the term "3D" shall be understood as images like in the above mentioned solutions Cyber Expo 3D, 3D City World or in the application CA 2 320 523. Models of displayed structures may be fully three-dimensional, and, preferably, they are fully three-dimensional. These images may be displayed using a flat (2D) screen of a user terminal such as a laptop, a mobile phone, a tablet, etc. In particular, it may be a touchscreen. Alternatively, images might be displayed using a device with an image projector or a holographic display.

Therefore, this invention intends to propose a new, attractive and intuitive interface, familiar to users, enabling them to find shops or service centres and conclude transactions over the Internet. It is an intuitive interface, especially for local users, i.e. users who know the geographical area where said shops or service centres are located in reality.

This invention fulfils this goal as it proposes real geographic representation of objects in 3D cities, including the location of service centres and shops, shapes of buildings and their facades, which allows local users to find their way easily.

The key to solving the above problem is the introduction of local communities into a given city as a basic element of the social networking site. Localness applies to both the communities themselves and electronic markets, which should be addressed to local communities. Localness is also limited territorially, to particular places in the city where shops, restaurants, cafés, hotels, service centres, offices, museums, etc. are located. Electronic market may be extended by introducing three-dimensional model of the city and combined with classic solutions for electronic markets, i.e. offers, orders, auctions, group purchases (group buying), etc. Users who have web browsers at their disposal should be able to participate in such market, including (by analogy to traditional markets) meeting with other users (possibly neighbours, or acquaintances). Owners of businesses are provided with a new, attractive method of contact with customers, and the customers have easy and attractive access (via social media and a 3D model of market) to offers and special offers. Moreover, representation of geographical location of service centres, companies, shops on the map along with the representation of models of buildings and interior design enables local residents that represent users of the service find their way around the virtual 3D city easily. It is worth mentioning that it works the other way, too. Users of the service getting familiar with a 3D market of a remote, unknown city, will be able to find service providers in the real city, e.g. a user who will visit a virtual café in a virtual city and will get an discount, will be able to find the way to the real café during his visit in the real city.

Localness is embodied by the following: the essential attribute of a company, a service centre, a shop, etc. in 3D marketplaces according to the invention is the information concerning the real geographic location of this company, service centre, shop, etc., e.g. in the form of geoposition coordinates (e.g. Global Positioning System, GPS, GLObal NAvigation Satellite System, GLONASS, Galileo, Compass or Indian Regional Navigational Satellite System), with the users being provided with the interface, in which topography visible on the screen (streets, roads, buildings, etc.) accurately corresponds to the topography (including the layout of streets, roads) of a real geographic place, and with the companies, service centres, shops, etc. being located in the virtual 3D image (environment) in the places that accurately correspond to their geographical location. Another step towards localness is making the buildings look as close to reality as possible. For the purpose of embodying the three dimensional representation of a city or its part, the topography is obtained based on digital maps, and the real appearance of buildings is reflected by means of appropriate processing (known to experts) of digital images. Optionally, users, who want to register in the environment according to the invention, might also be required to enter their geographical position, and registration may be restricted to local users only, i.e. users whose geographical location is within a specified area.

### Summary of the invention

According to the invention, the method of providing user interface for communication between a user, with user-related information stored in the database of users, and a supplier, with supplier-related information stored in the database of suppliers, especially for conducting commercial transactions over the Internet, carried out by means of a digital processing device that communicates with a display, data input devices, data output devices and data transmission devices, comprises the following steps:
a) obtaining a digital model of a real building corresponding to the supplier,
b) obtaining data that describe the exact geographical location of this real building corresponding to the supplier,
c) obtaining graphical data corresponding to a digital map of the neighbourhood of the real building corresponding to the supplier,
d) processing graphical data obtained in step c) by positioning said digital model on said digital map of the neighbourhood, according to the data that describe the exact geographical location of the real building corresponding to the supplier, obtained in step b),
e) displaying a visualization of graphical data processed in step d) using said display, and
f) enabling said communication between the user and the supplier depending on said visualization, wherein
said steps a)-f) are performed dependent on the input data provided by the user by means of a data input device that communicates with said digital processing device.

Preferably, in step b) the data describing the spatial orientation of the real building corresponding to the supplier are additionally obtained, and in step d) said digital model is positioned on said digital map of the neighbourhood according to the data describing the spatial orientation.

Preferably, after step b), there follows an additional step of
b2) saving data describing the exact geographical location of the real building corresponding to the supplier, and, optionally, data describing the spatial orientation of the real building corresponding to the supplier, in the database of suppliers, and linking said data with the appropriate supplier.

In this case, preferably, in step d) and/or e) the data stored in the database of suppliers, saved in step b2) is used.

Preferably, said data describing the exact geographical location of the real building corresponding to the supplier, are geoposition coordinates of the Global Positioning System, GPS, GLObal NAvigation Satellite System, GLONASS, Galileo, Compass or Indian Regional Navigational Satellite System.

Preferably, said digital model of the real building corresponding to the supplier is a three-dimensional model, 3D, and the visualization displayed in step e) is three-dimensional, 3D.

In a preferred variant embodiment of the invention, it is assumed that each user may switch to a 3D view, even if he did not provide his address data and/or geoposition data. He may appear in front of or inside the building of the service provider (3D), whom he found in the service. If the user provided his address data, he may immediately appear on the 3D map in the place where he lives by clicking on the appropriate link. Moreover, each user, irrespective of whether he provided his address data or not, may appear in any place he selects after clicking on the link starting the 3D application.

Preferably, step a) comprises the following individual steps:
a1. obtaining digital images of the real building corresponding to the supplier, optionally including images of the interior of the building,
a2. retouching images,
a3. creating a simple shape of the building, optionally including the interior,
a4. adding texture to the building, optionally including the interior,
a5. modelling the details of the building, optionally including the interior,
a6. exporting a finished 3D digital model of the building to a file, preferably a file in the *.*dae* format, and saving it in a database of models, optionally including the interior.

Preferably, step b) is embodied by one of the following actions:
- reading the data describing the exact geographical location of the supplier from an external database, which contains such data, preferably based on other data provided by the supplier,
- inputting the data describing the exact geographical location directly by the supplier; data describing the exact location of the supplier include supplier's address or geoposition coordinates,
- reading the data describing the exact geographical position from a digital map, preferably based on other data provided by the supplier; data describing the exact location of the supplier include supplier's address or name.

Preferably, step d) comprises the following actions:
d1. obtaining a digital map,
d2. obtaining a 3D digital model of the building from a file, preferably in the *.*dae* format, preferably from a database of models,
d3. obtaining the data describing the exact geographical location of the building, optionally including the data describing the spatial orientation of the building, especially the direction of the front of the building,
d4. specifying the parcel identifier of the digital map based on the data describing the exact geographical location of the building,
d5. saving a relation that links the parcel identifier with the 3D digital model of the building in a database, preferably in the database of suppliers, optionally
d6. verifying and/or correcting the position of the building on the map by an operator.

Preferably, in step e) a control element is additionally displayed, preferably a button or a hyperlink, upon the activation of which the user is directed to a webpage that contains information about the supplier and/or a form for finding products, and/or a form for concluding a transaction between the user and the supplier, wherein said activation takes place by transmitting appropriate input data provided by the user.

Preferably, in step e) a control element is additionally displayed, preferably a button or a hyperlink, upon the activation of which a digital model of the interior of a real building corresponding to the supplier is displayed on said display, preferably a three-dimensional (3D) model, wherein said activation takes place by transmitting appropriate input data provided by the user.

Preferably, said input data provided by the user comprise data about the virtual geographical location of the user, whereas the visualization displayed in step e) comprises graphical data corresponding to the area surrounding the virtual geographical position of the user.

Preferably, said data about the virtual geographical location of the user are supplied using an avatar, controlled by the user.

In such cases, especially preferably, said data about the virtual geographical position of the user are provided continuously, and the visualization displayed in step e) is updated accordingly.

Preferably, only such a subset of the database of suppliers is used, in which data describing the exact geographical location of the real building corresponding to the supplier indicate that the building is located within a defined geographical area.

In one variant embodiment of the invention data about the real geographical positions of users are known. The embodiment requires that the database of users contain information about the real geographical positions of users. Alternatively, the embodiment requires that users enter their geographical positions themselves, as one of said data pieces provided by the user. Knowing the real geographical position of the user, in this variant embodiment of the invention, an interface is provided exclusively to those users, whose real geographical position is within the defined geographical area.

The database may contain information about the real geographical position of the user, as the user decides whether to provide the address data or not. The data provided by the user need not be verified. In this sense, the term 'real' used in the paragraph above, does not necessarily reflect the actual state. It is not possible or necessary to verify geoposition data provided by the user whereas address data of companies are verified using the official registers of businesses (e.g. KRS in Poland).

The essence of the proposed interface is the concept of a 3D market, i.e. binding a three-dimensional representation of a real environment to a business service, taking service centres into special consideration. This representation, by means of an appropriate graphical engine, enables users to move in a virtual environment using avatars. It allows the user to meet and communicate with other users, visit various buildings, and, above all, access offers and discounts offered by service centres and shops. This environment may be extended depending on the type of graphical engine used to include additional functionalities such as different kinds of mini-games (which may also be used for marketing purposes), a bird's eye view, navigating to the destination, city sightseeing, visiting museums, etc. 3D markets may be tightly or loosely connected with the social and business service; a user may easily go from the www webpage to the selected location in the 3D marketplace, and may be directed to the appropriate form on the www webpage if he wishes to conclude a transaction for the selected offer in the service centre or in the shop in 3D marketplace.

### Brief description of drawings

The invention will now be described in more details, in preferred exemplary embodiments, with reference to the enclosed drawing, in which:
fig. 1 presents a method of navigating a user, who belongs to any community, between the social service and the 3D market,
fig. 2 presents a 3D marketplace and a few three-dimensional models of service centres located there,
fig. 3 presents a three-dimensional model of a hotel on the 3D market from the point of view of the user of the service,
fig. 4 presents the interior of a café on the 3D market, where the user can obtain information about the offer or special offers, etc.,
fig. 5 presents the interior of a café on the 3D market, where the user can choose a service, e.g book a selected table,
fig. 6 presents a residential and commercial building in Mi 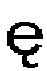 dzyrzec Podlaski, ul. Lubelska 13 (picture taken by Pawe 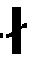 Zdunek),
fig. 7 presents a 3D model of a residential and commercial building located in Mi 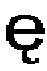 dzyrzec Podlaski, Lubelska 13,
fig. 8 presents residential and commercial tenement buildings in Mi 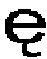 dzyrzec Podlaski, ul. Lubelska 22 and 24 (picture taken by Pawe 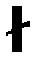 Zdunek),
fig. 9 presents a 3D model of residential and commercial tenement buildings in Mi 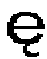 dzyrzec Podlaski, ul. Lubelska 22 and 24,
fig. 10 presents a 3D model of the building of the post office in Siedlce at the stage of adding details using the Sketchup tool, and
fig. 11 (prior art) presents 3D shapes of buildings located in Siedlce available from the Planet.osm project (http://www.osm-3d.org/map.htm), used for modelling cities in the interface according to the invention.

### Detailed description of the invention

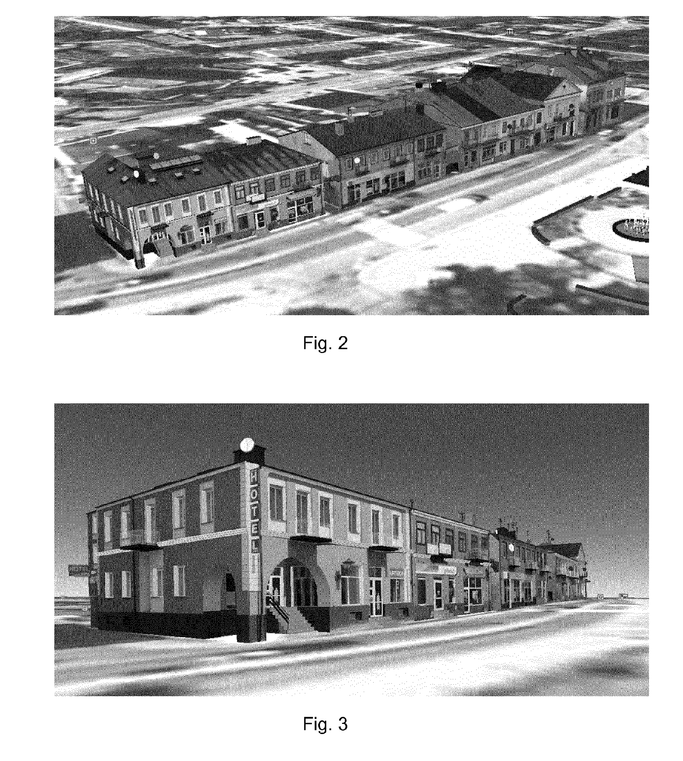

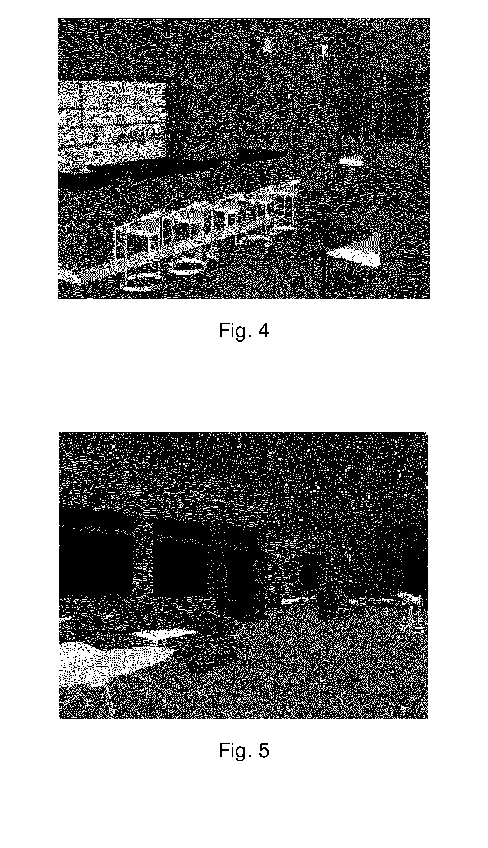

The concept of a 3D virtual marketplace involves creating a three-dimensional model of a city based on a digital map. Models of buildings have shop windows, entrances to shops, restaurants, cafés, service centres, hotels, etc. Moreover, exact representations of buildings (fig. 2) of service users (profiles of companies) are created for those users who expressed their permission and made the required payment. Representations of other buildings, streets, rivers, parks are created automatically (shapes of buildings without textures), based on the data available from a digital map such as the Open Street Map (fig. 11). It is also possible to place administration buildings and public buildings on the map. These models constitute a virtual representation of selected parts of the city available using a web browser or mobile devices. A logged-in user is represented by an avatar, which may walk round the virtual environment, meet other avatars and talk to them, arrange meetings in cafés, restaurants, shops, arrange sightseeing tours, or visits to museums. Interiors of buildings are also modelled to an extent that satisfies their owners (fig. 4 and fig. 5). When the user enters the room, he can become familiar with the commercial offer and special offers (e.g. discounts for bringing in other potential customers), and make business transactions. Marketplaces are managed and moderated by administrators, who need to obtain a licence authorizing them to run marketplaces first. A user, looking through the offers (service providers' or sellers' stands) available within a selected local marketplace, may, by clicking on a link, go to a virtual environment of a selected city. Depending on the entered parameters of request, the user's avatar may appear in front of the building or in the selected part of the building. Going from the virtual environment to the service, e.g. by clicking on the logo of the company in the marketplace, clicking on the list of offers of the service centre or the shop being visited, is equally easy. In this way, representations of companies (registered in the service) and their real registered offices including their geographical locations are positioned in 3D virtual cities. Stands in local marketplaces in the 3D city may be assigned to private clients, who would like to sell something, offer a service or commission an order. Users of the service - local residents of a particular real city usually know the topography of their own city and companies located there. Therefore, they will find their way around 3D marketplaces easily.

In the proposed internet service according to the invention, company profiles and their offers may be defined. Companies and users of the portal can place their offers in the marketplace. Users can find offers and orders placed by companies, search marketplaces, reserved and paid for stands within marketplaces and particular offers within stands. A user who would like the process of getting familiar with the offers available at a selected stand owned by a company or an individual user to be more attractive may go to a 3D marketplace. A 3D marketplace is an interface that is a three-dimensional (3D) visualization of the map of a real terrain, on which three-dimensional models of companies, institutions, service centres are placed along streets, adjacent squares or parks, with the above representation being geographical representation (fig. 2).

One may go from the service (www view) to the 3D marketplace by clicking on the link next to the selected company, stand or marketplace. By clicking on the link to the marketplace or stand, the user runs the application in his browser and positions the avatar representing the user in front of a selected service centre, shop or in a selected point of the 3D marketplace. Moreover, the user may run the 3D application directly from the service web page, and position his avatar in the selected place on the 3D map or his place of residence (provided that the user entered his address data in his profile). From now on the user can, i.e.:
- walk around a 3D marketplace using an avatar,
- meet other users and communicate with them (text messages),
- visit service centres represented by three-dimensional models (names of centres and their offers are downloaded from the service); within which the user can:
- access special offers (e.g. by visiting a service centre or a shop),
- access services (e.g. purchase products, book a table),
- get familiar with the layout of streets and buildings (especially in case of cities unfamiliar to the user),
- participate in different kinds of mini-games.

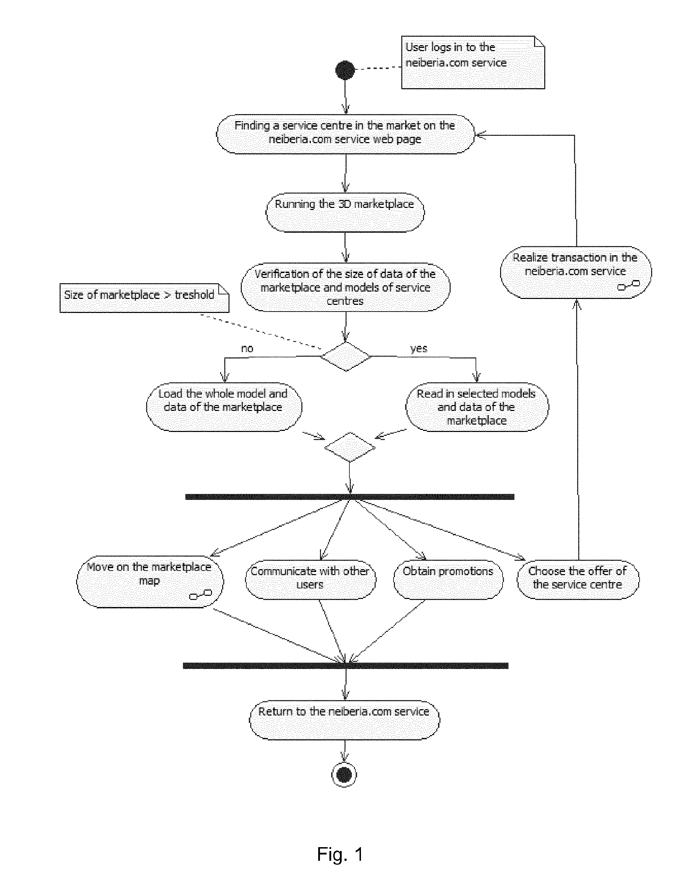

The method of navigation between the service and the 3D marketplace is shown in fig. 1.

If the user would like to access the offer of a service centre or a shop, e.g. buy a product or book a table in a café, he clicks on the corresponding element and is directed to the service, where the transaction is realized using appropriate forms. After the transaction is completed, the user may return to the 3D marketplace. A mechanism for completing transactions directly in the 3D marketplace, without the necessity to use the service, may also be available.

3D marketplaces run in the user's web browser. The only requirement for the 3D marketplace to display correctly is having the appropriate plug-in for the web browser. The size of downloaded data describing the marketplace (service centres and shops as well as their 3D models) is optimized to ensure smooth work with the application. Depending on the browser (for a desktop or a mobile device) a certain limit for the size of downloaded data is specified. If the size of the 3D marketplace data is within the limit, all data about the marketplace are downloaded, otherwise only the data about the part of the marketplace surrounding the position of the user's avatar on the map are downloaded. The required models are downloaded dynamically as the user's avatar is moving around the 3D marketplace.

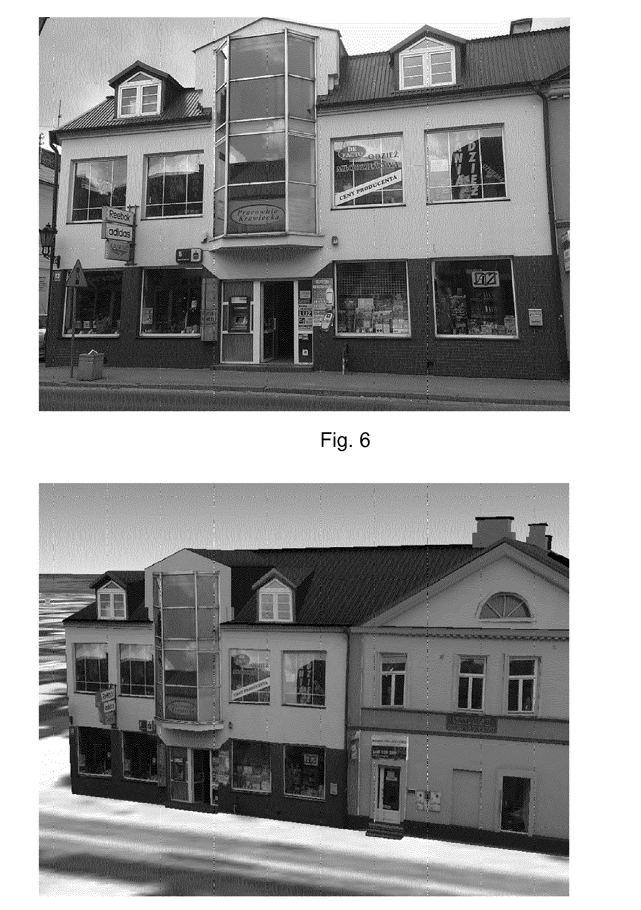

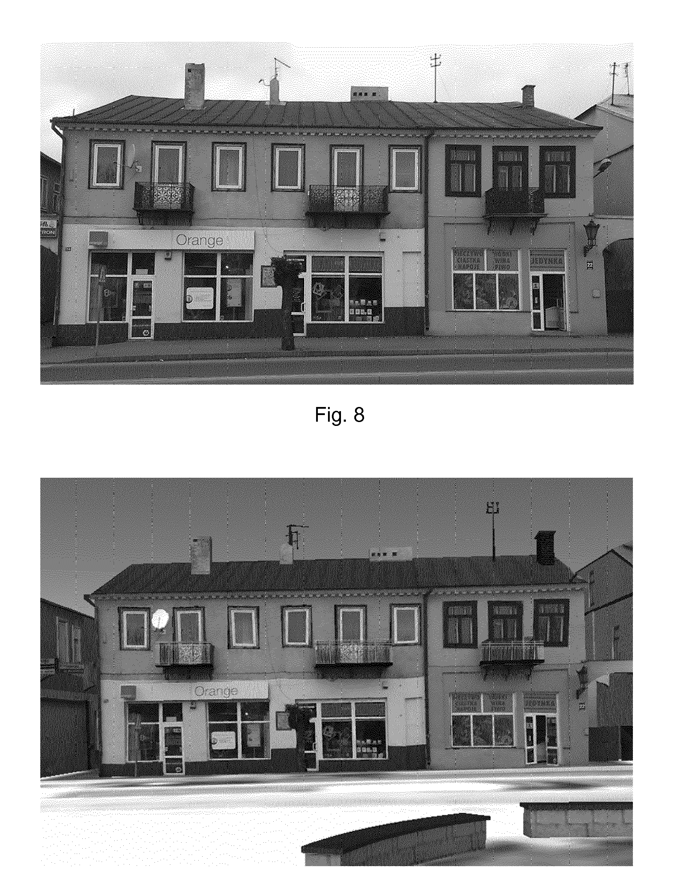

The process of creating a representation of a real building in the portal, commissioned by a company, in a preferred exemplary embodiment, comprises the following:
1. Obtaining digital images of the building (fig. 6 and fig. 8).
2. Retouching images (removing people, cars, trees, etc. which cover the building) using any graphics processing package.
3. Creating a simple shape of building (e.g. using programs such as Sketchup or Blender).
4. Adding texture (retouched image) onto the building (e.g. by using Sketchup or Blender).
5. Modelling details of buildings such as balconies, pillars, etc., depending on the owner's preferences (e.g. using Sketchup or Blender), fig. 10.
6. Exporting a finished model of the building (fig. 7 and fig. 9) to the *.*dae* format and saving it to a repository of models of the service.
7. Optionally, it is possible to create a representation of the interior of the building by realizing steps 1-6 above.

The process of placing a model of the building on the map, in preferred exemplary embodiment, comprises the following steps:
1. Obtaining a digital map (e.g. the Planet.osm project http://wiki.openstreetmap.org/wiki/Planet.osm), containing at least data about the topography of streets/roads in the vicinity of the building being placed on the map.
2. Obtaining a model of the building from the repository of the models of the service (*.*dae* file).
3. Obtaining geoposition coordinates based on the company's profile data in the service and determine the direction of the front of the building; coordinates of any geopositioning system e.g. Global Positioning System, GPS, GLObal NAvigation Satellite System, GLONASS, Galileo, Compass or Indian Regional Navigational Satellite System may be used for that purpose.
4. Specifying the parcel identifier of the map on the basis of the data about the location of the building.
5. Saving a relation binding the parcel identifier with the model of the building to the database table.
6. Then, manual verification and/or correction of the position of the building on the map is possible:
   a. if the position is correct - the position is confirmed;
   b. otherwise - the position of the building is corrected.

Obtaining geoposition coordinates required to bind the model of the building with the profile of the company, in preferred exemplary embodiment, is realized as follows:
1. Creating a profile of the company in the service (depending on the country, it may be required by law to provide register information about a company, e.g. NIP or REGON number in Poland).
2. Fetching the company's address data from the available official register of businesses based on the register information provided (e.g. in Poland: fetching data from the National Court Register (Krajowy Rejestr S 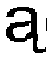 dowy, KRS) website, based on NIP or REGON number) and saving them in the company's profile.
3. Automatic determination of geoposition coordinates on the basis of address data from the internet map service (e.g. Google maps), and saving them in the company's profile; coordinates of any geopositioning system e.g. Global Positioning System, GPS, GLObal NAvigation Satellite System, GLONASS, Galileo, Compass or Indian Regional Navigational Satellite System may be used for that purpose.

## Claims

1. A method of providing user interface for communication between a user, with user-related information stored in the database of users, and a supplier, with supplier-related information stored in the database of suppliers, especially for conducting commercial transactions over the Internet, carried out by means of a digital processing device that communicates with a display, data input devices, data output devices and data transmission devices, comprising the following steps:
a) obtaining a digital model of a real building corresponding to the supplier,
b) obtaining data that describe the exact geographical location of this real building corresponding to the supplier,
c) obtaining graphical data corresponding to a digital map of the neighbourhood of the real building corresponding to the supplier,
d) processing graphical data obtained in step c) by positioning said digital model on said digital map of the neighbourhood, according to the data that describe the exact geographical location of the real building corresponding to the supplier, obtained in step b),
e) displaying a visualization of graphical data processed in step d) using said display, and
f) enabling said communication between the user and the supplier depending on said visualization, wherein
said steps a)-f) are performed dependent on the input data provided by the user by means of a data input device that communicates with said digital processing device.

2. The method according to claim 1, **characterized in that** in step b) the data describing the spatial orientation of the real building corresponding to the supplier are additionally obtained, and in step d) said digital model is positioned on said digital map of the neighbourhood according to the data describing the spatial orientation.

3. The method according to claim 1 or 2, **characterized in that** after step b) there follows an additional step of
b2) saving data describing the exact geographical location of the real building corresponding to the supplier, and optionally, data describing the spatial orientation of the real building corresponding to the supplier, in the database of suppliers, and linking said data with the appropriate supplier.

4. The method according to claim 3, **characterized in that** in step d) and/or e) the data stored in the database of suppliers, saved in step b2) is used.

5. The method according to any of the preceding claims, **characterized in that** said data describing the exact geographical location of the real building corresponding to the supplier, are geoposition coordinates, preferably the coordinates of the Global Positioning System, GPS, GLObal NAvigation Satellite System, GLONASS, Galileo, Compass or Indian Regional Navigational Satellite System.

6. The method according to any of the preceding claims, **characterized in that** said digital model of the real building corresponding to the supplier is a three-dimensional model, 3D, and the visualization displayed in step e) is three-dimensional, 3D.

7. the method according to any of the preceding claims, **characterized in that** step a) comprises the following individual steps:
a1. obtaining digital images of the real building corresponding to the supplier, optionally including images of the interior of the building,
a2. retouching images,
a3. creating a simple shape of the building, optionally including the interior,
a4. adding texture to the building, optionally including the interior,
a5. modelling the details of the building, optionally including the interior,
a6. exporting a finished 3D digital model of the building to a file, preferably a file in the *.*dae* format, and saving it in a database of models, optionally including the interior.

8. The method according to any of the preceding claims, **characterized in that** step b) is embodied by one of the following actions:
• reading the data describing the exact geographical location of the supplier from an external database, which contains such data, preferably based on other data provided by the supplier,
• inputting the data describing the exact geographical location directly by the supplier,
• reading the data describing the exact geographical position from a digital map, preferably based on other data provided by the supplier.

9. The method according to any of the preceding claims, **characterized in that** step d) comprises the following actions:
d1. obtaining a digital map,
d2. obtaining a 3D digital model of the building from a file, preferably in the *.*dae* format, preferably from a database of models,
d3. obtaining the data describing the exact geographical location of the building, optionally including the data describing the spatial orientation of the building, especially the direction of the front of the building,
d4. specifying the parcel identifier of the digital map based on the data describing the exact geographical location of the building,
d5. saving a relation that links the parcel identifier with the 3D digital model of the building in a database, preferably in the database of suppliers, optionally
d6. verifying and/or correcting the position of the building on the map by an operator.

10. The method according to any of the preceding claims, **characterized in that** in step e) a control element is additionally displayed, preferably a button or a hyperlink, upon the activation of which the user is directed to a webpage that contains information about the supplier and/or a form for finding products, and/or a form for concluding a transaction between the user and the supplier, wherein said activation takes place by transmitting appropriate input data provided by the user.

11. The method according to any of the preceding claims, **characterized in that** in step e) a control element is additionally displayed, preferably a button or a hyperlink, upon the activation of which a digital model of the interior of a real building corresponding to the supplier is displayed on said display, preferably a three-dimensional (3D) model, wherein said activation takes place by transmitting appropriate input data provided by the user.

12. The method according to any of the preceding claims, **characterized in that** said input data provided by the user comprise data about the virtual geographical location of the user, whereas the visualization displayed in step e) comprises graphical data corresponding to the area surrounding the virtual geographical position of the user.

13. The method according to claim 12, **characterized in that** said data about the virtual geographical location of the user are supplied using an avatar, controlled by the user.

14. The method according to claim 12 or 13, **characterized in that** said data about the virtual geographical position of the user are provided continuously, and the visualization displayed in step e) is updated accordingly.

15. The method according to any of the preceding claims, **characterized in that** only such a subset of the database of suppliers is used, in which data describing the exact geographical location of the real building corresponding to the supplier indicate that the building is located within a defined geographical area.
